# EUROPÄISCHE PATENTSCHRIFT

(11) **EP 4 370 358 B1**
(45) Veröffentlichungstag und Bekanntmachung des Hinweises auf die Patenterteilung: **26.11.2025**
(21) Anmeldenummer: 22729248.9
(22) Anmeldetag: 31.05.2022
(51) Int. Cl.: B60K 1/00, B60K 1/04

(54) **ZENTRALMODUL EINES ELEKTROFAHRZEUGS SOWIE ELEKTROFAHRZEUG**
CENTRAL MODULE OF AN ELECTRIC VEHICLE, AND ELECTRIC VEHICLE
MODULE CENTRAL D'UN VÉHICULE ÉLECTRIQUE ET VÉHICULE ÉLECTRIQUE

(30) Priorität: 12.07.2021 DE 102021207329
(43) Veröffentlichungstag der Anmeldung: 22.05.2024
(73) Patentinhaber: Robert Bosch GmbH, 70442 Stuttgart (DE)
(72) Erfinder: BECKER, Bodo, 83626 Valley (DE); REMLINGER, Markus, 83714 Miesbach (DE); KURZ, Josef Maximilian, 83104 Ostermuenchen (DE); HAMMER, Uwe, 83026 Rosenheim (DE); WIRTH, Christoph, 89415 Lauingen (DE); SCHWARZMANN, Dieter, 70178 Stuttgart (DE); GANSWIND, Markus, 71706 Markgroeningen (DE)
(86) Internationale Anmeldenummer: PCT/EP2022/064708
(87) Internationale Veröffentlichungsnummer: WO 2023/285020

(56) Entgegenhaltungen:
- DE-A1- 102011 109 024
- US-A1- 2016 065 038
- US-A1- 2020 317 039

## Beschreibung

### Stand der Technik

Die vorliegende Erfindung betrifft ein Zentralmodul mit einer Vielzahl von Thermomodulen und elektrischen Modulen für ein Elektrofahrzeug sowie ein Elektrofahrzeug mit einem derartigen Zentralmodul.

Elektrofahrzeuge sind aus dem Stand der Technik bekannt und werden aus unterschiedlichsten Gründen verstärkt nachgefragt. Nachteile bisheriger Elektrofahrzeuge im Vergleich mit Fahrzeugen mit Brennkraftmaschinen sind beispielsweise die relativ hohen Herstellkosten. Ferner sind Reichweiten von Elektrofahrzeugen u.a. bedingt durch eine Kapazität der wieder aufladbaren Antriebsbatterien und des hohen Gewichts der Elektrofahrzeuge begrenzt. Insofern besteht im Stand der Technik ein erheblicher Verbesserungsbedarf.

Die gattungsgemäße US 2020/317039 A1 beschreibt integrierte Montagesysteme für die Montage elektrischer Antriebskomponenten in elektrifizierten Fahrzeugen. Die DE 10 2011 109 024 A1 beschreibt ein elektrisches Antriebsmodul für ein Fahrzeug, insbesondere Nutzfahrzeug, mit Elektro- oder Hybridantrieb, mit zumindest einem über einen Wechselrichter aufladbaren Batteriepaket, einem das Batteriepaket aufnehmenden, am Kraftfahrzeug-Aufbau befestigbaren Tragrahmen und mit einer Kühleinrichtung zum Temperieren der elektrischen Bauteile. Des Weiteren zeigt die US 2016/065038 A1 ein Antriebsmodul für Fahrzeuge, umfassend einen Fahrzeugantriebsmotor, ein Gehäuse, das so konfiguriert ist, dass es den Fahrzeugantriebsmotor und eine Getriebevorrichtung aufnimmt, die die Drehkraft des Fahrzeugantriebsmotors auf die Achsen überträgt, einen am Gehäuse montierten Klimakompressor für den Fahrzeuginnenraum und eine integrierte Steuerung Modul, das am Gehäuse montiert ist und eine erste Leistungsumwandlungsvorrichtung zum Antreiben des Fahrzeugantriebsmotors und eine zweite Leistungsumwandlungsvorrichtung zum Antreiben des Klimakompressors im Fahrzeuginnenraum enthält, wobei die ersten und zweiten Leistungsumwandlungsvorrichtungen in das integrierte Steuermodul integriert sind

### Offenbarung der Erfindung

Das erfindungsgemäße Zentralmodul eines Elektrofahrzeugs mit den Merkmalen des Anspruchs 1 weist demgegenüber den Vorteil auf, dass eine signifikante Reduzierung von Herstellungskosten für das Elektrofahrzeug möglich ist. Ferner ist das erfindungsgemäße Zentralmodul sehr kompakt und platzsparend aufgebaut, so dass sich ein zusätzlicher nutzbarer Bauraum für das Elektrofahrzeug ergibt, welcher beispielsweise als Stauraum oder ähnliches genutzt werden kann. Weiterhin weist das erfindungsgemäße Zentralmodul ein reduziertes Gewicht auf, so dass ein Gesamtgewicht eines Elektrofahrzeugs mit Zentralmodul reduziert werden kann. Dies wird erfindungsgemäß dadurch erreicht, dass das Zentralmodul eine Vielzahl von einzelnen separaten Modulen für das Elektrofahrzeug umfasst. Ferner umfasst das Zentralmodul einen Montagerahmen sowie eine separate, zentrale Stromversorgungseinheit für die einzelnen Module des Zentralmoduls. Die Vielzahl der Module umfasst dabei wenigstens ein Hochvoltmodul und wenigstens ein Thermomodul. Besonders bevorzugt sind sämtliche Hochvoltmodule und sämtliche Thermomodule des Elektrofahrzeugs in das Zentralmodul integriert. Durch die Integration der einzelnen Module in das Zentralmodul können die einzelnen Module schon integriert in das Zentralmodul vormontiert werden, so dass beispielsweise bei einem Fahrzeughersteller bei der Herstellung des Elektrofahrzeugs das Zentralmodul nur als ein Block am Elektrofahrzeug montiert werden muss. Hierdurch kann ein Montageaufwand beim Hersteller des Elektrofahrzeugs signifikant reduziert werden. Die separate Stromversorgungseinheit für die Module und mehrere oder alle Hochvoltmodule des Zentralmoduls an einer ersten Seite des Montagerahmens angeordnet. Die erste Seite des Montagerahmens ist dabei eingerichtet, im montierten Zustand des Zentralmodul im Elektrofahrzeug zum Fahrzeuginneren gerichtet zu sein. Wenn somit das Zentralmodul in einem vorderen Bereich des Elektrofahrzeugs montiert ist, sind die Stromversorgungseinheit und die Hochvoltmodule des Zentralmoduls zum Fahrzeuginneren hin gerichtet, so dass bei einem Aufprall die Strom führenden Module und insbesondere die Hochvoltmodule möglichst geschützt angeordnet sind. Ferner sind mehrere oder alle Thermomodule des Zentralmoduls an einer zweiten Seite des Montagerahmens angeordnet, welche eingerichtet ist, im montierten Zustand des Zentralmoduls im Elektrofahrzeug zur Fahrzeugaußenseite gerichtet zu sein. Somit können die Thermomodule, welche keine Hochvoltanwendungen aufweisen, als Knautschzone bei einem Aufprall für die Hochvoltmodule und die Stromversorgungseinheit und das Elektrofahrzeug dienen.

Die Unteransprüche zeigen bevorzugte Weiterbildungen der Erfindung.

Weiter bevorzugt umfasst das Zentralmodul eine zentrale Steuereinheit, welche eingerichtet ist, alle Module des Zentralmoduls zu steuern. Dadurch müssen nicht einzelne Steuereinheiten für die jeweiligen Module des Zentralmoduls vorgesehen werden, sondern alle in das Zentralmodul integrierten Module können mittels der zentralen Steuereinheit gesteuert werden. Hierdurch wird die Komplexität des Zentralmoduls weiter gesenkt.

Weiter bevorzugt ist die zentrale Steuereinheit eingerichtet, auch eine wieder aufladbare Antriebsbatterie des Elektrofahrzeugs zu steuern. Dadurch kann auf eine separate Steuereinheit an der Antriebsbatterie des Elektrofahrzeugs verzichtet werden.

Vorzugsweise umfasst das Hochvoltmodul ein Lademodul für die Antriebsbatterie und/oder ein Spannungswandlermodul und/oder ein Hochvolt-PTC-Heizmodul (positive temperature coefficient) und/oder ein Stromverteilungsmodul (PDU, power distribution unit).

Weiter bevorzugt umfasst das Thermomodul ein Kühlmodul für die Antriebsbatterie und/oder ein Heizmodul für die Antriebsbatterie und/oder ein Kühlmodul für Bauteile des Antriebsstrangs des Elektrofahrzeugs und/oder ein Klimaanlagenmodul und/oder ein Wärmepumpenmodul zum Heizen des Elektrofahrzeugs.

Weiter bevorzugt sind alle Pumpen und/oder Ventile und/oder Armaturen und/oder Ausgleichsbehälter und weitere Bauteile mit Ausnahme der Leitungen der Thermomodule und elektrischer Verbindungsleitungen im Zentralmodul angeordnet. Somit kann ein Montageaufwand für das Elektrofahrzeug weiter reduziert werden und am Zentralmodul sind lediglich Leitungsschnittstellen für die Thermomodule und die elektrischen Verbindungsleitungen vorzusehen.

Vorzugsweise weist der Montagerahmen des Zentralmoduls Schnittstellen für eine Fixierung an einer E-Achse, welche einen Elektromotor, ein Getriebe und eine Leistungselektronik für den Elektromotor umfasst, auf. Die Schnittstellen sind vorzugsweise an einer Unterseite des Montagerahmens angeordnet. Dadurch kann das Zentralmodul auf eine E-Achse montiert werden.

Weiter bevorzugt umfasst das Zentralmodul elektrische Sicherungen für die einzelnen Module.

Ferner betrifft die vorliegende Erfindung ein Elektrofahrzeug umfassend ein erfindungsgemäßes Zentralmodul. Vorzugsweise ist das Zentralmodul in einem vorderen Bereich des Elektrofahrzeugs angeordnet.

Weiter bevorzugt umfasst das Elektrofahrzeug eine E-Achse mit einem Elektromotor, einem Getriebe und einer Leistungselektronik für den Elektromotor, wobei das Zentralmodul auf der E-Achse montiert ist. Die E-Achse ist vorzugsweise die Vorderachse des Elektrofahrzeugs.

Weiter bevorzugt umfasst das Elektrofahrzeug einen Laderaum, welcher über dem Zentralmodul angeordnet ist. Besonders bevorzugt ist der Laderaum in einem vorderen Bereich des Elektrofahrzeugs angeordnet.

### Kurze Beschreibung der Zeichnungen

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische, perspektivische Ansicht eines Zentralmoduls gemäß einem bevorzugten Ausführungsbeispiel der Erfindung mit ausgewählten perspektivisch dargestellten einzelnen Modulen und
- Figur 2: eine schematische, perspektivische Teilansicht eines Elektrofahrzeugs mit einem Zentralmodul gemäß Figur 1.

### Bevorzugte Ausführungsformen der Erfindung

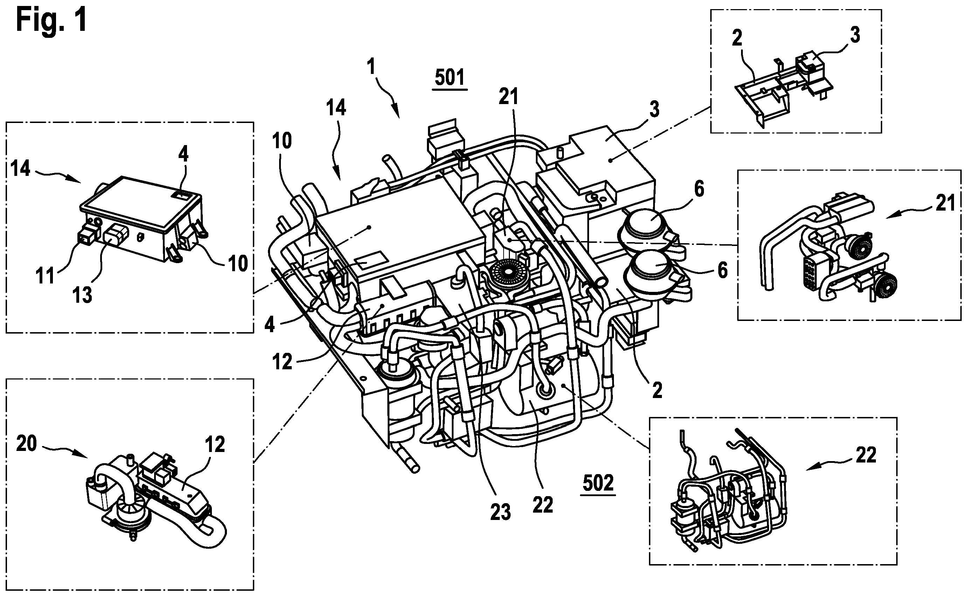

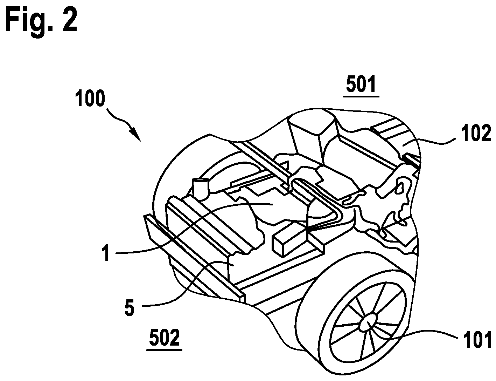

Nachfolgend wird unter Bezugnahme auf die Figuren 1 und 2 ein Zentralmodul 1 sowie ein Elektrofahrzeug 100 gemäß einem ersten bevorzugten Ausführungsbeispiel der Erfindung im Detail beschrieben.

Wie aus Figur 1 ersichtlich ist, umfasst das Zentralmodul 1 einen Montagerahmen 2, auf welchem eine Vielzahl von einzelnen Modulen für das Elektrofahrzeug angeordnet sind. Wie aus Figur 1 ersichtlich ist, ist direkt auf dem Montagerahmen 2 eine separate, zentrale Stromversorgungseinheit 3 für alle Module des Zentralmoduls angeordnet. Dadurch weist das Zentralmodul eine von der Antriebsbatterie des Elektrofahrzeugs unabhängige Stromversorgung auf.

Das Zentralmodul 1 umfasst ferner eine Vielzahl von einzelnen Modulen, wobei die Vielzahl von Modulen Hochvoltmodule für elektrische Anwendungen und Thermomodule für thermische Anwendungen umfasst.

Wie im Detail in Figur 1 dargestellt, umfasst das Zentralmodul als Hochvoltmodule ein Lademodul 10 für die Antriebsbatterie des Elektrofahrzeugs, ein Spannungsmodul 11, ein Hochvolt-PTC-Heizmodul 12 und ein Stromverteilungsmodul 13. Hierbei sind insbesondere das Lademodul 10, das Hochvolt-PTC-Heizmodul 12 und das Stromverteilungsmodul 13 in einer Unterbaugruppe 14 integriert.

In die Unterbaugruppe 14 ist ferner noch eine zentrale Steuereinheit 4 integriert, welche sämtliche Module des Zentralmoduls steuert. Die Steuereinheit 4 kann ferner eingerichtet sein, auch die Antriebsbatterie des Elektrofahrzeugs zu steuern.

Als Thermomodule umfasst das Zentralmodul ein Kühlmodul 20 für die Antriebsbatterien des Elektrofahrzeugs, ein Kühlmodul 21 für Bauteile des Antriebsstrangs, ein Klimaanlagenmodul 22 und ein Wärmepumpenmodul 23.

Alle Module des Zentralmoduls sind am Montagerahmen 2 fixiert. Der Montagerahmen 2 weist hierbei eine flächige Aufnahme für die Stromversorgungseinheit 3 auf sowie eine leistenartige Rahmenkonstruktion, an welcher die restlichen Module des Zentralmoduls fixiert sind. Insbesondere sind hierbei einzelne Leisten des Montagerahmens 2 austauschbar angeordnet, so dass der Montagerahmen 2 auf einfache Weise an unterschiedliche Elektrofahrzeuge hinsichtlich seiner Länge und Breite angepasst werden kann.

Wie weiter aus Figur 1 ersichtlich ist, sind die Hochvoltmodule des Zentralmoduls alle an einer ersten Seite 501 des Montagerahmens 2 angeordnet. Die Thermomodule des Zentralmoduls sind dabei an einer zweiten Seite 502 des Montagerahmens 2 angeordnet. Wie aus Figur 1 ersichtlich ist, verlaufen die erste Seite und die zweite Seite parallel zueinander.

Dabei wird im endmontierten Zustand des Zentralmoduls, welcher schematisch in Figur 2 gezeigt ist, die erste Seite mit den Hochvoltmodulen derart am Elektrofahrzeug montiert, dass die Hochvoltmodule in Richtung des Fahrzeuginneren gerichtet sind. Die Thermomodule sind zur Fahrzeugaußenseite gerichtet. Dadurch bilden die Thermomodule bei einem möglichen Aufprall des Elektrofahrzeugs eine Knautschzone, so dass möglichst die Hochvoltmodule durch den Aufprall nicht oder nur unwesentlich beschädigt werden.

Figur 2 zeigt den Einbauzustand des Zentralmoduls an einer Vorderachse 101 eines Elektrofahrzeugs 100. Die Vorderachse 101 ist eine E-Achse umfassend einen Elektromotor, ein Getriebe und eine Leistungselektronik für den Elektromotor. Die Bauteile der E-Achse sind vorzugsweise in einem gemeinsamen Gehäuse angeordnet. Auf der E-Achse ist das Zentralmodul 1 montiert. Vor der E-Achse und vor dem Zentralmodul 1 ist ferner ein Kühler 5 angeordnet. Die Fahrzeugbatterien sind in Figur 2 mit dem Bezugszeichen 102 bezeichnet und im Wesentlichen zwischen den Achsen des Elektrofahrzeugs angeordnet.

Somit ist das Zentralmodul 1 direkt auf der E-Achse 101 fixiert. Das Zentralmodul 1 umfasst alle wesentlichen Einzelmodule des Elektrofahrzeugs sowohl Hochvoltmodule als auch Thermomodule. Ferner sind sämtliche Ventile und Absperrorgane sowie Ausgleichsbehälter 6 (vgl. Figur 1) für verschiedene Thermomodule in das Zentralmodul 1 integriert. Bei dem in Figur 2 gezeigten Einbau an der Vorderachse kann durch den kompakten Aufbau des Zentralmoduls 1 ein vorderer Kofferraum über dem Zentralmodul 1 am Elektrofahrzeug vorgesehen werden.

Somit können in das Zentralmodul 1 alle Funktionalitäten sowohl einer Hochvoltseite als auch einer Niedervoltseite des Elektrofahrzeugs sowie von thermischen Einrichtungen, insbesondere Kühlaggregaten in das Zentralmodul 1 integriert werden. Dabei kann das Zentralmodul 1 bei einem Zulieferbetrieb vormontiert werden und insbesondere auch vorab in Betrieb genommen werden, da als Schnittstellen lediglich Leitungsschnittstellen, sowohl elektrische Leitungsschnittstellen als auch thermische Fluidschnittstellen, z.B. Kühlflüssigkeit-Schnittstellen vorhanden sind. Auch weist das Zentralmodul 1 eine eigene Stromversorgung 3 auf. Durch die vollständige Integration verschiedener einzelner Module des Elektrofahrzeugs in das Zentralmodul 1 ist somit ein besonders kompakter und Gewicht sparender Aufbau möglich.

## Patentansprüche

1. Zentralmodul eines Elektrofahrzeugs, umfassend:
- eine Vielzahl von Modulen für das Elektrofahrzeug,
- einen Montagerahmen (2) und
- eine separate Stromversorgungseinheit (3) für Module des Zentralmoduls,
- wobei die Vielzahl von Modulen wenigstens ein Hochvoltmodul und wenigstens ein Thermomodul umfasst, **dadurch gekennzeichnet, dass** die Stromversorgungseinheit (3) und Module des Hochvoltmoduls an einer ersten Seite des Montagerahmens (2) angeordnet sind, wobei die erste Seite eingerichtet ist, im montierten Zustand des Zentralmoduls im Elektrofahrzeug zum Fahrzeuginneren gerichtet zu sein, und
- wobei Module des Thermomoduls an einer zweiten Seite des Montagerahmens (2) angeordnet sind, wobei die zweite Seite eingerichtet ist, im montierten Zustand des Zentralmoduls im Elektrofahrzeug zur Fahrzeugaußenseite gerichtet zu sein.

2. Zentralmodul nach Anspruch 1, ferner umfassend eine zentrale Steuereinheit (4), welche eingerichtet ist, alle Module des Zentralmoduls zu steuern.

3. Zentralmodul nach Anspruch 2, wobei die zentrale Steuereinheit (4) eingerichtet ist, ferner eine Antriebsbatterie des Elektrofahrzeugs zu steuern.

4. Zentralmodul nach einem der vorhergehenden Ansprüche, wobei das Hochvoltmodul ein Lademodul (10) für die Antriebsbatterie des Elektrofahrzeugs und/oder ein Spannungswandlermodul (11) und/oder ein Hochvolt-PTC-Heizmodul (12) und/oder ein Stromverteilungsmodul (13) umfasst.

5. Zentralmodul nach einem der vorhergehenden Ansprüche, wobei das Thermomodul ein Kühlmodul (20) für die Antriebsbatterie und/oder ein Kühlmodul (21) für Bauteile des Antriebsstranges und/oder ein Klimaanlagenmodul (22) und/oder ein Wärmepumpenmodul (23) zum Heizen des Elektrofahrzeugs umfasst.

6. Zentralmodul nach einem der vorhergehenden Ansprüche, wobei alle Pumpen und/oder Ventile und/oder Armaturen und/oder Ausgleichsbehälter (6) und weitere Bauteile der Module mit Ausnahme von Leitungen im Zentralmodul angeordnet sind.

7. Zentralmodul nach einem der vorhergehenden Ansprüche, wobei der Montagerahmen (2) Schnittstellen für eine Fixierung an einer E-Achse (101), welche einen Elektromotor, ein Getriebe und eine Leistungselektronik für den Elektromotor umfasst, aufweist.

8. Elektrofahrzeug umfassend ein Zentralmodul nach einem der vorhergehenden Ansprüche.

9. Elektrofahrzeug nach Anspruch 8, ferner umfassend eine E-Achse (101) mit einem Elektromotor, einem Getriebe und einer Leistungselektronik für den Elektromotor, wobei das Zentralmodul (1) auf der E-Achse (101) montiert ist.

10. Elektrofahrzeug nach Anspruch 8 oder 9, wobei das Zentralmodul im Vorderwagen des Elektrofahrzeugs angeordnet ist und insbesondere über dem Zentralmodul ein Kofferraum ausgebildet ist.

## Claims

1. Central module of an electric vehicle, comprising:
- a plurality of modules for the electric vehicle,
- a mounting frame (2) and
- a separate power supply unit (3) for modules of the central module,
- wherein the plurality of modules comprises at least one high-voltage module and at least one thermal module,
**characterized in that**
the power supply unit (3) and modules of the high-voltage module are arranged on a first side of the mounting frame (2), the first side being configured to be directed towards the interior of the vehicle in the mounted state of the central module in the electric vehicle, and
- wherein modules of the thermal module are arranged on a second side of the mounting frame (2), the second side being configured to be directed towards the outside of the vehicle in the mounted state of the central module in the electric vehicle.

2. Central module according to Claim 1, further comprising a central control unit (4) configured to control all modules of the central module.

3. Central module according to Claim 2, wherein the central control unit (4) is configured to also control a drive battery of the electric vehicle.

4. Central module according to any one of the preceding claims, wherein the high-voltage module comprises a charging module (10) for the drive battery of the electric vehicle and/or a voltage converter module (11) and/or a high-voltage PTC heating module (12) and/or a power distribution module (13).

5. Central module according to any one of the preceding claims, wherein the thermal module comprises a cooling module (20) for the drive battery and/or a cooling module (21) for components of the drive train and/or an air conditioning module (22) and/or a heat pump module (23) for heating the electric vehicle.

6. Central module according to any one of the preceding claims, wherein all pumps and/or valves and/or fittings and/or expansion tanks (6) and additional components of the modules, with the exception of cables, are arranged in the central module.

7. Central module according to any one of the preceding claims, wherein the mounting frame (2) comprises interfaces for fixation on an electric axle (101), which comprises an electric motor, a transmission and power electronics for the electric motor.

8. Electric vehicle comprising a central module according to any one of the preceding claims.

9. Electric vehicle according to Claim 8, further comprising an electric axle (101) having an electric motor, a transmission and power electronics for the electric motor, wherein the central module (1) is mounted on the electric axle (101).

10. Electric vehicle according to Claim 8 or 9, wherein the central module is arranged in the front end of the electric vehicle and a luggage compartment is formed in particular above the central module.

## Revendications

1. Module central d'un véhicule électrique, comprenant :
- une pluralité de modules pour le véhicule électrique,
- un cadre de montage (2), et
- une unité d'alimentation électrique (3) séparée pour des modules du module central,
- la pluralité de modules comprenant au moins un module haute tension et au moins un module thermique,
**caractérisé en ce que**
l'unité d'alimentation électrique (3) et des modules du module haute tension sont disposés sur un premier côté du cadre de montage (2), le premier côté étant mis au point pour être dirigé vers l'intérieur de véhicule dans l'état monté du module central dans le véhicule électrique, et
- des modules du module thermique étant disposés sur un deuxième côté du cadre de montage (2), le deuxième côté étant mis au point pour être dirigé vers le côté extérieur de véhicule dans l'état monté du module central dans le véhicule électrique.

2. Module central selon la revendication 1, comprenant en outre une unité de commande centrale (4), qui est mise au point pour commander tous les modules du module central.

3. Module central selon la revendication 2, l'unité de commande centrale (4) étant mise au point pour commander en outre une batterie d'entraînement du véhicule électrique.

4. Module central selon l'une des revendications précédentes, le module haute tension comprenant un module de charge (10) pour la batterie d'entraînement du véhicule électrique et/ou un module de conversion de tension (11) et/ou un module de chauffage CTP haute tension (12) et/ou un module de distribution de courant (13).

5. Module central selon l'une des revendications précédentes, le module thermique comprenant un module de refroidissement (20) pour la batterie d'entraînement et/ou un module de refroidissement (21) pour des composants de la chaîne cinématique et/ou un module d'installation de climatisation (22) et/ou un module de pompe à chaleur (23) pour chauffer le véhicule électrique.

6. Module central selon l'une des revendications précédentes, la totalité des pompes et/ou soupapes et/ou garnitures et/ou réservoirs de compensation (6) et d'autres composants des modules à l'exception de conduites étant disposés dans le module central.

7. Module central selon l'une des revendications précédentes, le cadre de montage (2) comportant des interfaces pour un blocage sur un essieu électronique (101), qui comprend un moteur électrique, une transmission et un équipement électronique de puissance pour le moteur électrique.

8. Véhicule électrique comprenant un module central selon l'une des revendications précédentes.

9. Véhicule électrique selon la revendication 8, comprenant un essieu électronique (101) avec un moteur électrique, une transmission et un équipement électronique de puissance pour le moteur électrique, le module central (1) étant monté sur l'essieu électronique (101).

10. Véhicule électrique selon la revendication 8 ou 9, le module central étant disposé dans la caisse avant du véhicule électrique et un espace de coffre étant réalisé en particulier au-dessus du module central.
